(19) Europäisches Patentamt
European Patent Office
Office européen des brevets

(11) **EP 2 402 782 A2**

(12) # EUROPEAN PATENT APPLICATION

(43) Date of publication:
**04.01.2012 Bulletin 2012/01**

(51) Int Cl.:
***G01S 7/491*** *(2006.01)*     ***G01S 17/32*** *(2006.01)*

(21) Application number: **11171889.6**

(22) Date of filing: **29.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.06.2010 JP 2010148910**

(71) Applicant: **Yamatake Corporation**
**Tokyo 100-6419 (JP)**

(72) Inventor: **Ueno, Tatsuya**
**Tokyo 100-6419 (JP)**

(74) Representative: **Kling, Simone**
**Lavoix Munich**
**Bayerstrasse 85a**
**80335 München (DE)**

(54)    **Signal evaluating device and signal evaluating method**

(57)    A signal evaluating device comprises: a binarizing portion for binarizing an input signal; a run length measuring portion for measuring the run length of the input signal during the evaluating interval, using the output of the binarizing means as the input; and a validity evaluating portion for evaluating whether or not the input signal is valid, from the degree of matching of a run length frequency distribution, obtained from the measurement results by the run length measuring portion, and a geometric distribution. The validity evaluating portion evaluates whether or not an input signal is valid through a ratio of the total frequency during the evaluation interval to Nsamp/2, or a ratio of the frequency of a class 1 during the evaluating interval to Nsamp/4, where Nsamp is the total of the sampling clocks for measuring the run length during the evaluating interval.

FIG. 1

EP 2 402 782 A2

**Description**

Cross Reference to Related Applications

The present application claims priority to Japanese Patent Application No. 2010-148910, filed June 30, 2010, which is incorporated herein by reference.

Field of Technology

The present invention relates to a signal evaluating device and signal evaluating method for evaluating whether or not an input signal is valid.

Background of the Invention

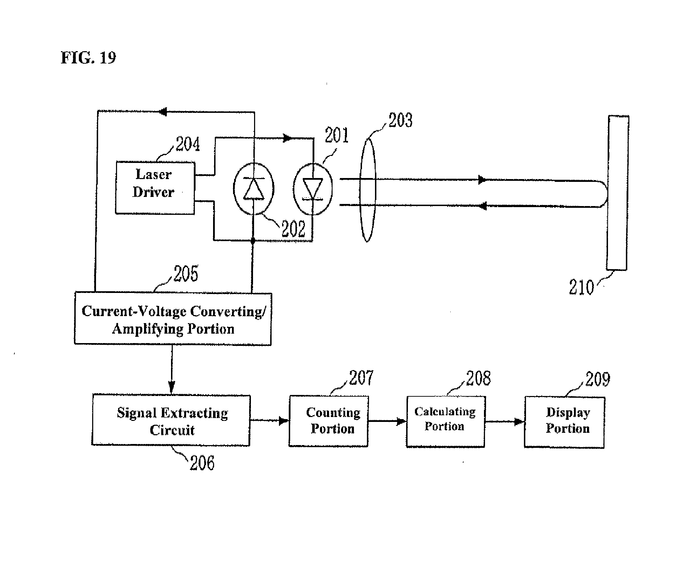

Conventionally, there have been proposals for self-coupling laser sensors that uses the self-coupling effect of a semiconductor laser (See Japanese Unexamined Patent Application Publication 2006-313080 ("JP '080")). The structure of the self-coupling laser sensor is illustrated in FIG. 19. The self-coupling laser sensor of FIG. 19 includes a semiconductor laser 201 for emitting a laser beam at an object 210; a photodiode 202 for converting the optical output of the semiconductor laser 201 to an electric signal; a lens 203 for focusing the beam from the semiconductor laser 201 to illuminate the object 210, and to focus the beam returned from the object 210 to cause it to be incident into the semiconductor laser 201; a laser driver 204 for repetitively switching the semiconductor laser 201 between a first oscillating interval wherein the oscillating wavelength increases continuously and a second oscillating interval wherein the oscillating wavelength decreases continuously; a current-voltage converting amplifying portion 205 for converting and amplifying the output current from the photodiode 202 into a voltage; a signal extracting circuit 206 for taking the second derivative of the output voltage of the current-voltage converting amplifying portion 205; a counting device 207 for counting the number of mode-hop pulses (hereinafter termed "MHPs") included in the output voltage of the signal extracting circuit 206; a calculating device 208 for calculating the distance from the object 210 and the speed of the object 210; and a display device 206 for displaying the calculation result by the calculating device 208.

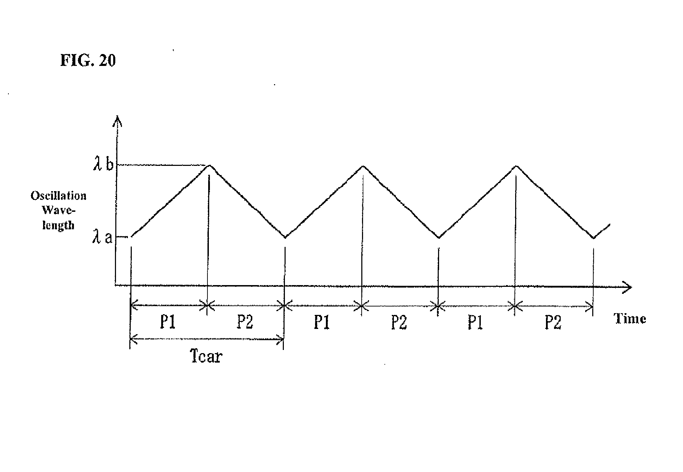

The laser driver 204 provides, as a driving current to the semiconductor laser 201, a triangle wave driving current that repetitively increases and decreases at a constant rate of change in respect to time. As a result, the semiconductor laser 201 is driven so as to repetitively alternate between a first oscillating interval wherein the oscillating wavelength continuously increases at a constant rate of change, and a second oscillating interval wherein the oscillating wavelength is continuously reduced at a constant rate of change. FIG. 20 is a diagram illustrating the changes in the oscillating wavelength of the semiconductor laser 201 over time. In FIG. 20: P1 is the first oscillating interval; P2 is the second oscillating interval; $\lambda a$ is the minimum value for the oscillating wavelength in each interval; $\lambda b$ is the maximum value for the oscillating wavelength in each interval; and Tcar is the period of the triangle wave.

The beam that is emitted from the semiconductor laser 201 is focused by the lens 203 to be incident on the object 210. The beam that is reflected from the object 210 is focused by the lens 203 to be incident into the semiconductor laser 201. The photodiode 202 converts the output of the semiconductor laser 201 into an electric current. The current-voltage converting/amplifying portion 205 converts the output current from the photodiode 202 into a voltage, and then amplifies that voltage, and the signal extracting circuit 206 takes the second derivative of the output voltage of the current-voltage converting/amplifying portion 205. The number of MHPs included in the output voltage of the signal extracting circuit 206 is counted by the signal counting device 207 for the first oscillating interval P1 and for the second oscillating interval P2. The calculating device 208 calculates a physical quantity, such as the distance of the object 210 or the velocity of the object 210 based on the minimum oscillating wavelength $\lambda a$ and the maximum oscillating wavelength $\lambda b$ of the semiconductor laser 1 and the number of MHPs in the first oscillating interval P1 and the number of MHPs in the second oscillating interval P2.

In a self-coupling laser sensor, noise such as scattered light is counted as a signal, even if there is no object in front of the semiconductor laser and even if the object cannot be detected due to being further than the limit of the range of detectability for the object, so that the calculation of the physical quantity will be performed as if an object existed in front of the semiconductor laser, and thus it is necessary to evaluate the validity of the signals that are counted.

In MHPs, which are self-coupled signals, the signal components vary depending on the physical quantity and on the signal component, making the evaluation of whether that which is outputted from the signal extracting circuit is noise or a signal difficult, and there has been no known method for evaluating noise versus signals, that is, no easy method for achieving an evaluation of whether or not an inputted signal is valid.

Conventionally, methods have been considered that use frequency analysis, such as fast Fourier transforms (FFT), in evaluating the validity of signals in sensors that calculate physical quantities based on signal frequencies or counts, such as sensors that use the principle of interference, such as self-coupling laser sensors. However, in FFT there is a problem in that the amount of calculation required is large, so the processing is time-consuming.

Note that problems such as described above are not limited to self-coupling laser sensors, but may occur similarly in other devices as well.

The present invention was created in order to solve the problem areas set forth above, and the object thereof is to provide a signal evaluating device and a signal evaluating method able to achieve easily evaluations as to whether or not an inputted signal is valid.

Summary of the Invention

In the light of above, a signal evaluating device according to claim 1 and a signal evaluating method according to claim 6 are provided.

The signal evaluating device according to the present invention includes binarizing means for binarizing an input signal; run length measuring means for measuring the run length of the sign when there is a change in the sign that is the result of binarization of the input signal during the evaluating interval, using the output of the binarizing means as the input; and evaluating means for evaluating whether or not the input signal is valid, from the degree of matching of a run length frequency distribution, obtained from the measurement results by the run length measuring means, and a geometric distribution.

Moreover, in one configuration example of the signal evaluating device according to the present invention, the binarizing means binarize the input signal in a state wherein the hysteresis width is zero, and the evaluating means evaluate whether or not the input signal is valid through a ratio of the total frequency during the evaluation interval to Nsamp/2, or a ratio of the frequency of a class 1 during the evaluating interval to Nsamp/4, where Nsamp is the total of the sampling clocks for measuring the run length during the evaluating interval.

Additionally, in one configuration example of a signal evaluating device according to the present invention, the evaluating means has logarithmic converting means for performing a logarithmic conversion of the frequency, for the run length frequency distribution obtained from the measurement results during the evaluating interval by the run length measuring means, and validity evaluating means for evaluating whether or not the input signal is valid, from a coefficient of determination when a least-squares method for a linear function that is the geometric distribution is used on the run length frequency distribution after the logarithmic conversion obtained from the results of the conversion process by the logarithmic converting means.

Additionally, in one configuration example of a signal evaluating device according to the present invention, the validity evaluating means evaluate whether or not the input signal is valid from the coefficient of determination when a least-squares method for an exponential function that is the geometric distribution is used on the run length frequency distribution of those classes that are less than a specific value, of the run length frequency distribution after logarithmic conversion.

Additionally, in one configuration example of a signal evaluating device according to the present invention, the evaluating means further has feature value calculating means for calculating a feature value $T_0$ of a run length distribution, from the measurement results during the evaluating interval by the run length measuring means; wherein the validity evaluating means evaluate whether or not the input signal is valid from a coefficient of determination when a least-squares method is applied to a run length frequency distribution wherein the class is no higher than $2T_0$, of the run length frequency distribution after the logarithmic conversion.

Additionally, the signal evaluating method according to the present invention includes a binarizing step for binarizing an input signal; a run length measuring step for measuring the run length of the sign when there is a change in the sign that is the result of binarization of the input signal during the evaluating interval, using the output of this binarizing step as the input; and an evaluating step for evaluating whether or not the input signal is valid, from the degree of matching of a run length frequency distribution, obtained from the measurement results by the run length measuring step, and a geometric distribution.

According to an embodiment, a signal evaluating device is provided comprising : a binarizing portion for binarizing an input signal; a run length measuring portion for measuring the run length of the input signal during the evaluating interval, using the output of the binarizing means as the input; and a validity evaluating portion for evaluating whether or not the input signal is valid, from the degree of matching of a run length frequency distribution, obtained from the measurement results by the run length measuring portion, and a geometric distribution. The validity evaluating portion evaluates whether or not an input signal is valid through a ratio of the total frequency during the evaluation interval to Nsamp/2, or a ratio of the frequency of a class 1 during the evaluating interval to Nsamp/4, where Nsamp is the total of the sampling clocks for measuring the run length during the evaluating interval.

The present invention enables easy evaluation of whether or not an input signal is valid, from the degree of matching between a run length frequency distribution, obtained from measurement results by run length measuring means, and a geometric distribution. In the present invention, no frequency analyzing technique, such as FFT, is used, thus making it possible to evaluate in a short period of time and with low calculation overhead, whether or not an input signal is valid.

Further advantages, features, aspects and details are evident from the dependent claims, the description and the drawings, which relate to embodiments of the invention and are described in the following:

Brief Description of the Drawings

FIG. 1 is a block diagram illustrating a structure of a self-coupled laser sensor according to the present invention.

FIG. 2 is a waveform diagram illustrating schematically the output voltage waveform of the current/voltage converging amplifying portion and the output voltage waveform of the filter portion.

FIG. 3 is a block diagram illustrating a structure of a signal evaluating device in a self-coupled laser sensor according to the present invention.

FIG. 4 is a flowchart illustrating the operation of a signal evaluating device in a self-coupled laser sensor according to the present invention.

FIG. 5 is a diagram for explaining the operation of a binarizing portion and a run length measuring portion in a self-coupled laser sensor according to the present invention.

FIG. 6 is a diagram illustrating an example of a run length frequency distribution in a non-signal state, and a logarithmically transformed distribution of that run length frequency distribution.

FIG. 7 is a diagram for explaining regarding the probability that the sign will change and the probability that the run will not change after binarization.

FIG. 8 is a diagram for explaining the effects of a signal evaluating device in a self-coupled laser sensor according to the present invention.

FIG. 9 is a block diagram illustrating a structure of a signal evaluating device in a self-coupled laser sensor according to another example of the present invention.

FIG. 10 is a flowchart illustrating the operation of a signal evaluating device in a self-coupled laser sensor according to another example of the present invention.

FIG. 11 is a diagram for explaining the operation of a binarizing portion and a run length measuring portion in a self-coupled laser sensor according to another example of the present invention.

FIG. 12 is a diagram for explaining the effects of a signal evaluating device in a self-coupled laser sensor according to another example of the present invention.

FIG. 13 is a diagram for explaining the problem areas in a structure of a signal evaluating device in a self-coupled laser sensor according to another example of the present invention.

FIG. 14 is a diagram for explaining the problem areas in a structure of a signal evaluating device in a self-coupled laser sensor according to another example of the present invention.

FIG. 15 is a block diagram illustrating a structure of a signal evaluating device in a self-coupled laser sensor according to a further example of the present invention.

FIG. 16 is a flowchart illustrating the operation of a signal evaluating device in a self-coupled laser sensor according to a further example of the present invention.

FIG. 17 is a diagram for explaining the principle used in the evaluation by the signal evaluating device in a self-coupled laser sensor according to a further example of the present invention.

FIG. 18 is a diagram for explaining the effects a signal evaluating device in a self-coupled laser sensor according to a further example of the present invention.

FIG. 19 is a block diagram illustrating the structure of a conventional self-coupling laser sensor.

FIG. 20 is a diagram illustrating one example of change over time in the oscillating wavelength of the semiconductor laser in the self-coupling laser sensor of FIG. 19.

Detailed Description of the Invention

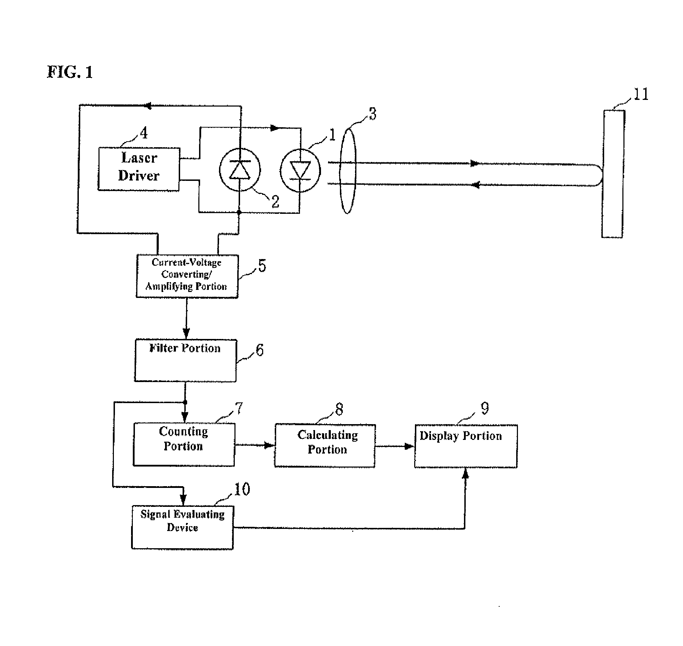

Forms for carrying out the present invention are explained below in reference to the figures. FIG. 1 is a block diagram illustrating a structure of a self-coupled laser sensor according to an example of the present invention.

The self-coupling laser sensor in FIG. 1 has a semiconductor laser 1 for emitting a laser beam at a object 11 that is the subject of the measurement; a photodiode 2 for converting the optical power of the semiconductor laser 1 into an electric signal; a lens 3 for focusing and emitting light from the semiconductor laser 1, and for focusing and injecting into the semiconductor laser 1 the return light from the object 11; a laser driver 4 that serves as oscillating wavelength modulating means for driving the semiconductor laser 1; a current-voltage converting/amplifying portion 5 for converting the output current from the photodiode 2 into a voltage and for amplifying that voltage; a filter portion 6 for eliminating the carrier wave from the output voltage of the current-voltage converting/amplifying portion 5; a counting portion 7 for counting the number of MHPs that are the self-coupled signals that are included in the output voltage of the filter portion 6; a calculating portion 8 for calculating the distance from the object 11 and the velocity of the object 11 based on the number of MHPs; a displaying portion 9 for displaying the calculation result by the calculating portion 8, and a signal evaluating device for evaluating whether or not the output of the filter portion 6 is a valid input signal.

For ease in the explanation, it shall be envisioned below that the semiconductor laser 1 that is used is not of the type that has a mode-hopping phenomenon (the VCSEL type or the DFB laser type).

The laser driver 4 provides, as a driving current to the semiconductor laser 1, a triangle wave driving current that repetitively increases and decreases at a constant rate of change in respect to time. As a result, the semiconductor laser 1 is driven so as to repetitively alternate between a first oscillating interval P1 wherein the oscillating wavelength continuously increases at a constant rate of change, and a second oscillating interval P2 wherein the oscillating wavelength is continuously reduced at a constant rate of change, proportional to the magnitude of the injection current. The change in the oscillating wavelength of the semiconductor laser 1 at this time is as illustrated in FIG. 20. In the present form of embodiment, the maximum value $\lambda b$ of the oscillating wavelength and the minimum value $\lambda a$ of the oscillating wavelength are both always constant, so the difference $\lambda b - \lambda a$ thereof is also always a constant.

The beam that is emitted from the semiconductor laser 1 is focused by the lens 3 to be incident on the object 11. The beam that is reflected from the object 11 is focused by the lens 3 to be incident into the semiconductor laser 1. Note that the focusing by the lens 3 is not absolutely necessary. The photodiode 2 is disposed within or in the vicinity of the semiconductor laser 1, and converts the optical power from the semiconductor laser 1 into an electric current. The current-voltage converting/amplifying portion 5 converts the output current from the photodiode 2 into a voltage, and then amplifies that voltage.

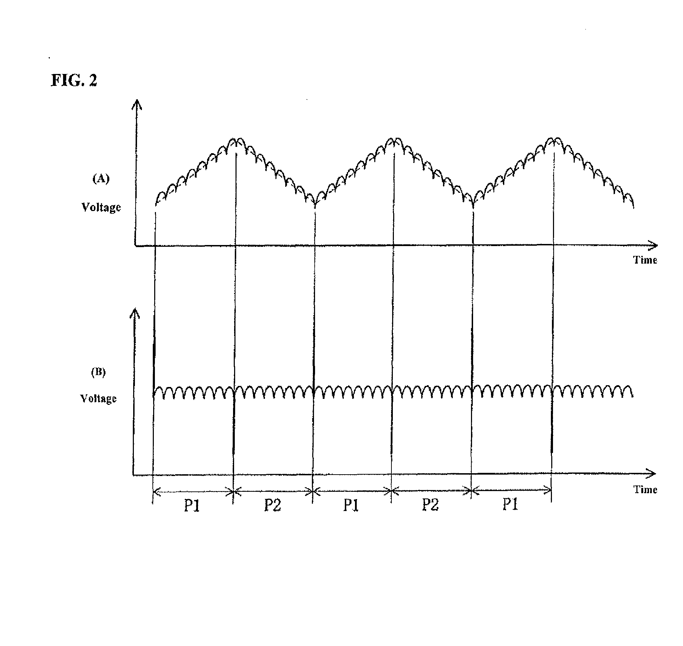

The filter portion 6 has the function of extracting a superimposed signal from a modulated wave. FIG. 2 (A) is a diagram illustrating schematically the output voltage waveform of the current-voltage converting/amplifying portion 5, and FIG. 2 (B) is a diagram illustrating schematically the output voltage waveform of the filter portion 6. These diagrams illustrate the progression of the waveform (the modulated wave) of FIG. 2 (A), which corresponds to the output of the photodiode 2, to the removal of the emitted waveform (the carrier wave) from the semiconductor laser 1 in FIG. 20, to the extraction of the MHP waveform (the interference waveform) of FIG. 2 (B). MHPs, which are the self-coupled signals that are produced through the self-coupling effect between the laser beam that is emitted from the semiconductor laser 1 and the beam that is returned from the object 11, are explained in, for example, JP '080, and thus detailed explanations thereof will be omitted here.

The number of MHPs included in the output voltage of the filter portion 6 is counted by the counting portion 7 for the first oscillating interval P1 and for the second oscillating interval P2. The counting portion 7 may use a counter that is structured from logical gates, or may use other means.

The calculating portion 8 calculates the distance to the object 11 and the velocity of the object 11 based on the minimum oscillating wavelength $\lambda a$ and the maximum oscillating wavelength $\lambda b$ of the semiconductor laser 1, and the number of MHPs counted by the calculating portion 7. The method for calculating the distance to the object 11 and the velocity of the object 11 is disclosed in, for example, JP '080, and thus detailed explanations thereof will be omitted here. Note that there is no limitation on the physical quantity measured by the present invention. For example, an oscillation frequency of an object may be calculated based on the number of MHPs, as disclosed in Japanese Unexamined Patent Application Publication 2010-78560, or an oscillation amplitude of an object may be calculated based on the number of MHPs, as disclosed in Japanese Unexamined Patent Application Publication 2010-78393. The display portion 9 may display the calculation results by the calculating portion 8.

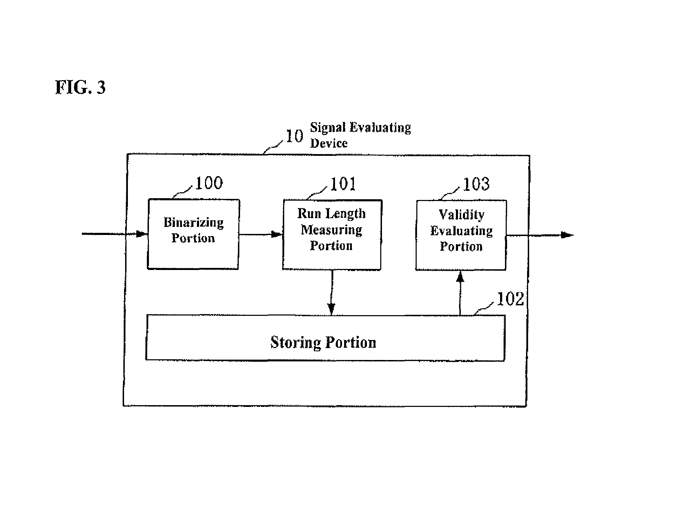

Following this, the signal evaluating device 10 evaluates whether or not the output of the filter portion 6 is a valid input signal. FIG. 3 is a block diagram illustrating one configuration of a signal evaluating device 10. The signal evaluating device 10 comprises: a binarizing portion 100; a run length measuring portion 101; a storing portion 102, and a validity evaluating portion 103.

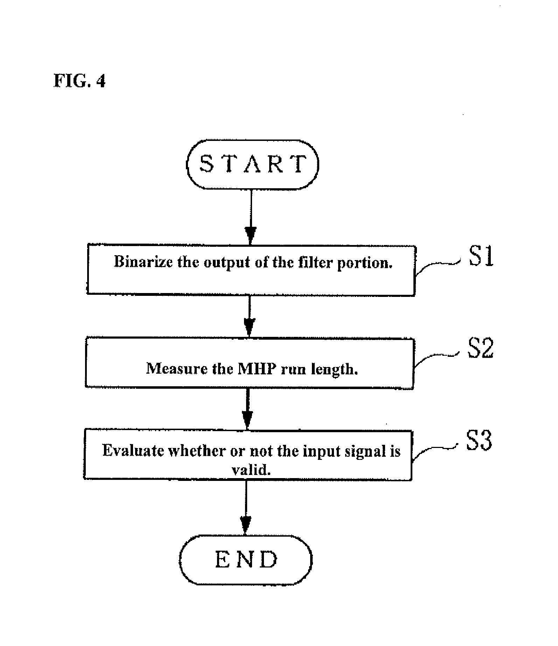

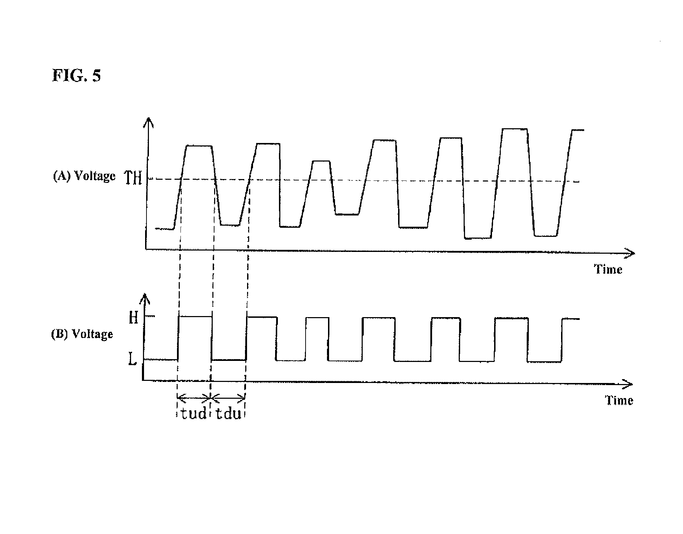

FIG. 4 is a flowchart illustrating the operation of the signal evaluating device 10. FIG. 5 (A) and FIG. 5 (B) are diagrams for explaining the operation of the binarizing portion 100 and the run length measuring portion 101, where FIG. 5 (A) is a diagram illustrating schematically the waveform of the output voltage of the filter portion 6, that is, the waveform of the MHPs, and FIG. 5 (B) is a diagram illustrating the output of a binarizing portion 100, corresponding to FIG. 5 (A).

First the binarizing portion 100 of the signal evaluating device 10 evaluates whether the output voltage of the filter portion 6 illustrated in FIG. 5 (A) is at the high level (H) or at the low level (L), and outputs the evaluation results as illustrated in FIG. 5 (B). At this time, the binarizing portion 100 evaluates at the high level when the output voltage from the filter portion 6 rises to be at or above a threshold value TH, and evaluates at the low level if the output voltage of the filter portion 6 falls to be below a threshold value TH, to binarize the output of the filter portion 6. (Step S1 in FIG. 4) Note that in the present example, the threshold value for detecting the rising edge of the output of the filter portion 6 and the threshold value for detecting the falling edge are the identical value TH. That is, the hysteresis width is zero.

Following this, the run length measuring portion 101 measures the run length of the MHPs during the evaluation interval for evaluating whether or not the input signal is valid (Step S2 in FIG. 4). Here, in the present example, the first oscillating interval P1 and the second oscillating interval P2 are separate oscillating intervals for the counting portion 7 to count the number of MHPs. The run length measuring portion 101 measures the time tud from the rising edge to the next falling edge of the output of the binarizing portion 100, as illustrated in FIG. 5 (B), and measures the time tdu from the falling edge to the next rising edge of the output of the binarizing portion 100, to measure the run length of the output of the binarizing portion 100 (that is, the run length of the MHP). In this way, the run length of the MHP is the time tud or tdu. In the run length measuring portion 101 the measurement, such as described above, is performed each time either a rising edge or a falling edge of the binarizing portion 100 is detected during the evaluation interval.

Note that the run length measuring portion 101 measures the run length of the MHP in units of cycles of a sampling clock. For example if the run length of the MHP is twice the sampling clock, then the magnitude of the run length is 2 (samplings). The frequency of the sampling clock is adequately high relative to the maximum frequency that may be assumed by the MHPs.

The storing portion 102 stores the measurement result of the run length measuring portion 101.

Following this, the validity evaluating portion 103 evaluates whether or not the input signal is valid, based on the measurement results of the run length measuring portion 101 stored in the storing portion 102 (Step S3 in FIG. 4). Specifically, the validity evaluating portion 103 calculates the ratio of the total number during the evaluating interval (the total number of run lengths in the evaluating interval) and the Nsamp/2, when the total number of sampling clocks during the evaluating interval is defined as Nsamp. This ratio is that which indicates the validity of the signal, and the lower the validity of the signal, the nearer this value is to 1. Given this, the validity evaluating portion 103 evaluates that signals (MHPs) that are included in the output of the filter portion 6 are invalid if this ratio is essentially 1, but if this ratio of the total frequency and Nsamp/2 is not essentially 1, then it evaluates that the signals (MHPs) included in the output of the filter portion 6 are valid. Here the "frequency" refers to the number of times that there is a change in the sign after binarization, or in other words, the number of run lengths. The ratio of the total frequency and Nsamp/2 during the evaluating interval being essentially 1 refers to being within a specific range centered around 1.

Additionally, the validity evaluating portion 103 calculates the ratio of the number of class 1 (samplings) and Nsamp/4 during the evaluating interval, to evaluate that the signals (MHPs) that are included in the output of the filter portion 6 are invalid if this ratio is essentially 1, but if this ratio of the frequency of class 1 and Nsamp/4 is not essentially 1, then it may evaluate that the signals (MHPs) included in the output of the filter portion 6 are valid. The ratio of the frequency of the class 1 and Nsamp/4 during the evaluating interval being essentially 1 refers to being within a specific range centered around 1.

The validity evaluating portion 103 may evaluate whether or not the input signal is valid using either the total frequency method or the method that uses the frequency of the class 1.

The signal evaluating device 10 performs processes such as described above with each evaluating interval. The display portion 9 displays the evaluation results by the signal evaluating device 10.

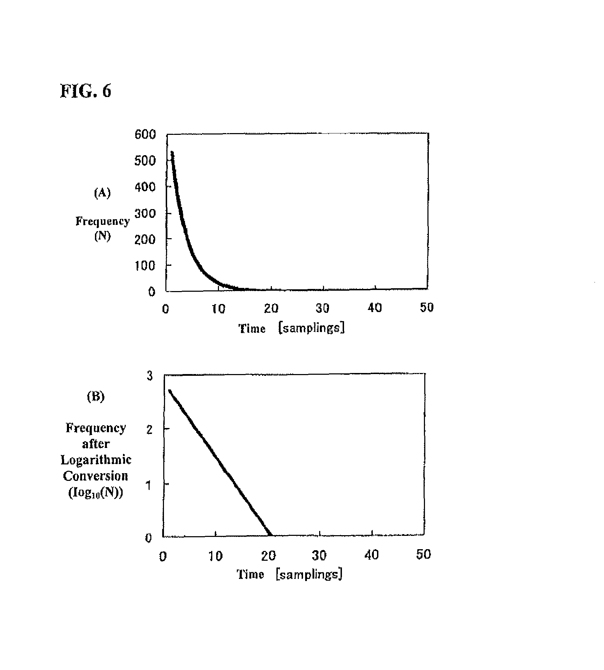

The principle behind the evaluation by the signal evaluating device 10 is explained next. An example of the frequency distribution of the run lengths that are measured by the run length measuring portion if not an MHP (if there is no object 11 in front of the semiconductor laser 1, or if the object 11 is too far away, outside of the detectable range, so as to not be detected), that is, if in a non-signal state, is shown in FIG. 6 (A). When the run length frequency distribution of FIG. 6 (A) is subjected to logarithmic conversion, then it will be as in FIG. 6 (B). The run length frequency distribution in the non-signal state follows a geometric distribution $F_{edge}(x)$ according to Equation (1), because it follows Bernoulli's theory, which is the probability theory of discrete time.

$$F_{edge}(x) = p \cdot (1 - p)^{x-1} \ldots (1)$$

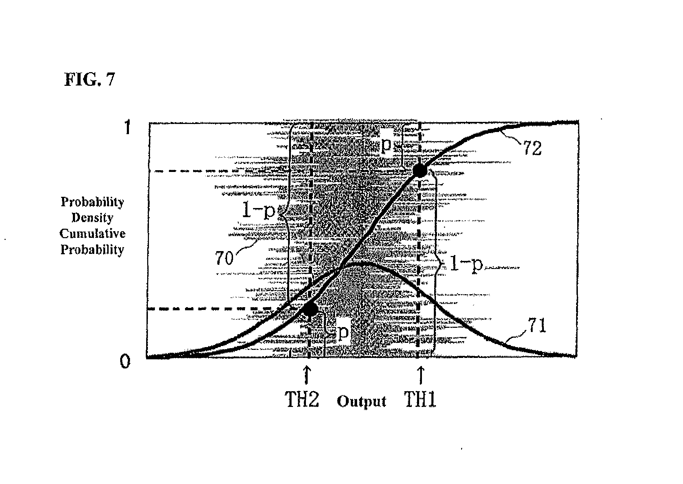

Equation (1) is explained below. In discrete time probability theory, the probability of success/failure can be expressed as a series of Bernoulli trials that have no time dependency. If there is no MHP, then that which is outputted from the filter portion 6 can be defined as white noise that has no time dependency. When white noise is binarized and the average value of the white noise is essentially equal to the center between the threshold values for TH1 and TH2, then, as illustrated in FIG. 7, if the probability of a transition in the sign after authorization from a low level to a high level or a high level to a low level is defined as p, then the probability that there is no change in sign can be defined as 1 - p. The case wherein the sign after binarization changes shall be termed "success" and the case wherein there is no change in sign shall be termed "failure." The horizontal axis in FIG. 7 is the output of the filter portion 6, where 70 represents white noise, 71 represents the probability density, and 72 represents the cumulative probability. Note that in FIG. 7, the threshold value for detecting the rising edge of the output of the filter portion 6 is defined as TH1 and the threshold value for detecting the falling edge is defined as TH2 (where TH2<TH1).

The probability that the same sign continues x times is the probability of x -1 failures and 1 successes, and thus can be expressed by Equation (1), above.

Given Equation (1), above, a relationship can be derived that the total frequency in the non-signal state when the hysteresis width is 0 (p = 0.5) will be 1/2 the total number of sampling clocks Nsamp, and when in a non-signal state when the hysteresis width is 0, the frequency of the class 1 will be 1/4 the total number of sampling clocks Nsamp.

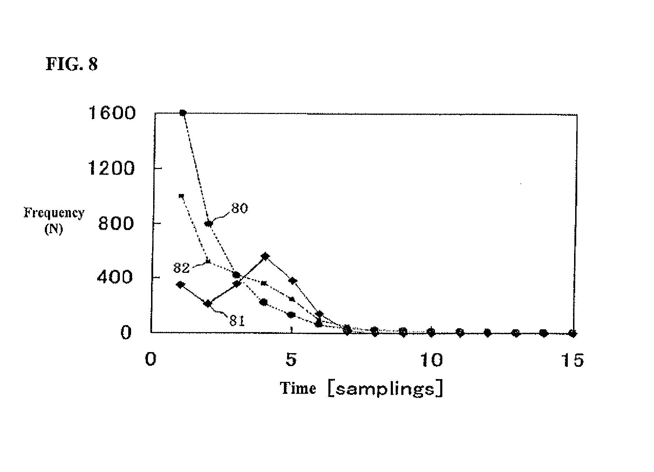

FIG. 8 is a diagram for explaining the effects of the signal evaluating device 10 in the present example, a diagram showing an example of the frequency distribution of the run lengths measured by the run length measuring portion 101. In FIG. 8: 80 is the frequency distribution when the output of the filter portion 6 is in the non-signal state; 81 is the frequency distribution when the signal included in the output of the filter portion 6 is valid and there is little noise; and 82 is the frequency distribution when the signal included in the output of the filter portion 6 is valid and there is a great deal of noise. In the example in FIG. 8, the total number of sampling clocks Nsamp during the evaluating interval is 7000.

The total frequency of the run length frequency distribution 80 is about 3450, which is about one half of the total number of sampling clocks Nsamp. On the other hand, the total frequencies for the run length frequency distributions 81 and 82 are each greatly below one half of the total number of sampling clocks Nsamp. Consequently, it can be seen that the total frequency can be used to evaluate whether or not the input signal is valid.

Additionally, the frequency of the class 1 of the run length frequency distribution 80 is about 1600, which is about 1/4 of the total number of sampling clocks Nsamp. On the other hand, the frequencies for the classes 1 of the run length frequency distributions 81 and 82 are each greatly below 1/4 of the total number of sampling clocks Nsamp. Consequently, it can be seen that the frequency class 1 can be used to evaluate whether or not the input signal is valid.

As described above, whether or not the input signal is valid can be evaluated easily through the present example.

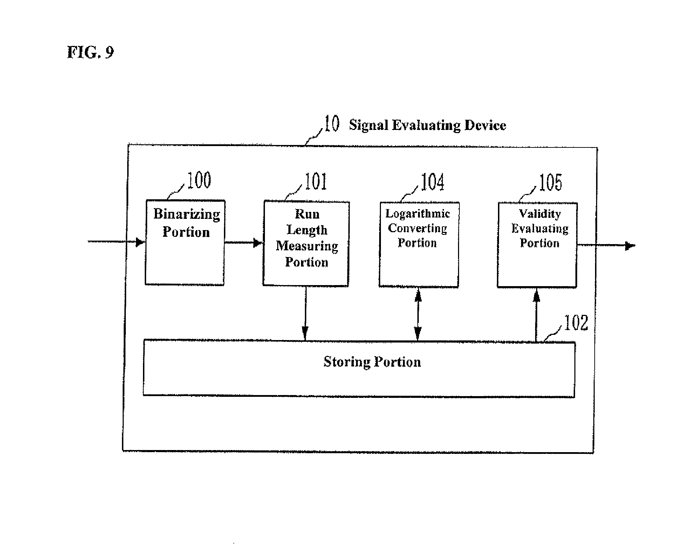

Another example according to the present invention is explained next. In the present example as well, the structure of the self-coupling laser sensor is identical to that in the above example, and thus the codes in FIG. 1 is used in the explanation. FIG. 9 is a block diagram illustrating one configuration of a signal evaluating device 10 according to the present example. The signal evaluating device 10 according to the present form of embodiment has a binarizing portion 100; a run length measuring portion 101; a storing portion 102, a logarithmic converting portion 104; and a validity evaluating portion 105.

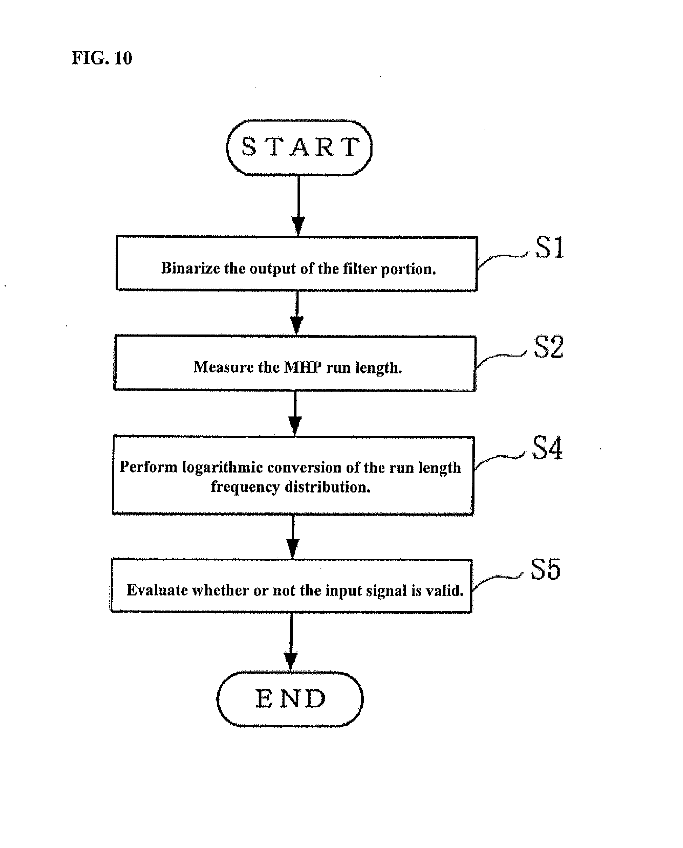

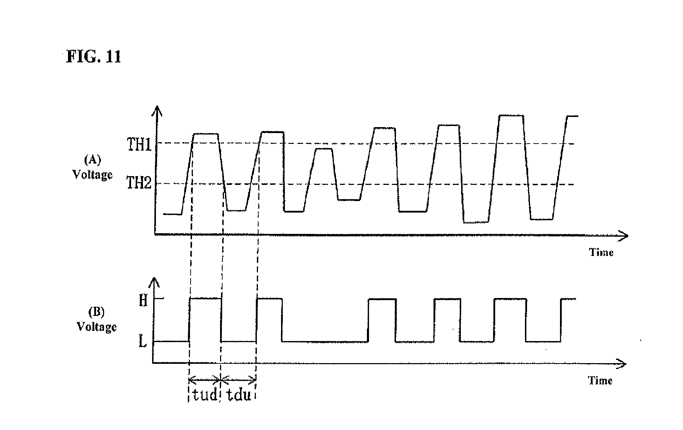

FIG. 10 is a flowchart illustrating the operation of a signal evaluating device 10 according to the present example. The operation of the binarizing portion 100 and of the run length measuring portion 101 is the same as in the above example. (Step S1 and S2 in FIG. 10) However, in the present example, preferably hysteresis is set in the threshold values at the time of binarization. That is, the binarizing portion 100 in the present example evaluates at the high level when the output voltage from the filter portion 6 illustrated in FIG. 11 (A) rises to be at or above a threshold value TH1, and evaluates at the low level if the output voltage of the filter portion 6 falls to be below a threshold value TH2 (wherein TH2 <TH1), to output a binarized result as in FIG. 11 (B).

Following this, the logarithmic converting portion 104 performs a frequency logarithmic transformation on the run length frequency distribution obtained from the measurement results during the evaluating interval of the run length measuring portion 101, stored in the storing portion 102 (Step S3 in FIG. 10). The conversion process results by the logarithmic converting portion 104 are stored in the storing portion 102.

Following this, the validity evaluating portion 105 evaluates whether or not the input signal is valid, based on the conversion processing results by the logarithmic converting portion 104 stored in the storing portion 102 (Step S5 in FIG. 4). Specifically, the validity evaluating portion 105 calculates a coefficient of determination (a regression $R^2$) when applying the least-squares method to the run length frequency distribution after logarithmic conversion, obtained from the conversion processing results of the logarithmic converting portion 104, and if this coefficient of determination is greater than a specific evaluation threshold value, then the evaluation is that the signal (MHP) included in the output of the filter portion 6 is invalid, but if the coefficient of determination is less than the evaluation threshold value, then the evaluation is that the signal (MHP) included in the output of the filter portion 6 is valid.

The signal evaluating device 10 performs processes such as described above with each evaluating interval. The display portion 9 displays the evaluation results by the signal evaluating device 10.

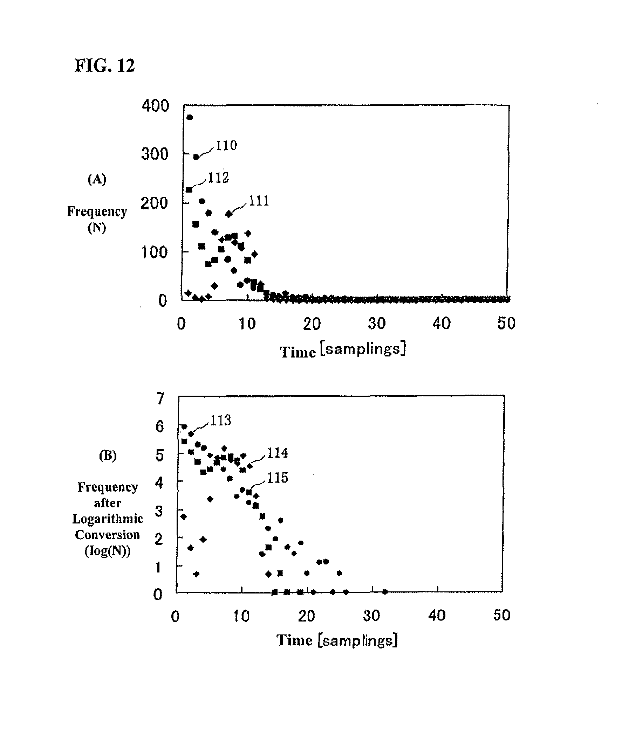

FIG. 12 (A) and FIG. 12 (B) are diagrams for explaining the effects of the signal evaluating device 10 in the present example, where FIG. 12 (A) is a diagram illustrating an example of the run length frequency distribution measured by the run length measuring portion 101, and FIG. 12 (B) is a diagram illustrating the run length frequency distribution after the logarithmic conversion by the logarithmic converting portion 104, for the run length frequency distribution of FIG. 12 (A). In FIG. 12 (A): 110 is the frequency distribution when the output of the filter portion 6 is in the non-signal state; 111 is the frequency distribution when the signal included in the output of the filter portion 6 is valid and there is little noise; and 112 is the frequency distribution when the signal included in the output of the filter portion 6 is valid and there is a great deal of noise. Moreover, in FIG. 12 (B), 113, 114, and 115 are the respective frequency distributions after logarithmic conversions of the run length frequency distributions 110, 111, and 112.

In the processing by the signal evaluating device 10 in the present example, the coefficient of determination obtained from the run length frequency distribution 113 is 0.9218, the coefficient of determination obtained from the run length frequency distribution 114 is 0.0698, and the coefficient of determination obtained from the run length frequency distribution 115 is 0.7875. Consequently, if the threshold value is set between 0.9218 and 0.7875, then it is possible to discriminate between a non-signal state and a state wherein the signal is valid.

Note that this is based on the same concept as in the above examples, wherein the evaluation of whether or not an input signal is valid is made from the degree of matching between a run length frequency distribution, obtained from measurement results by the run length measuring portion 101, and a geometric distribution.

Yet another example according to the present invention is explained next. If the hysteresis width when performing binarization in the above example is wide, then there are many omissions in the binarization, so that even if the MHP included in the output of the filter portion 6 is actually a valid signal, there is the potential that it is evaluated as not a signal.

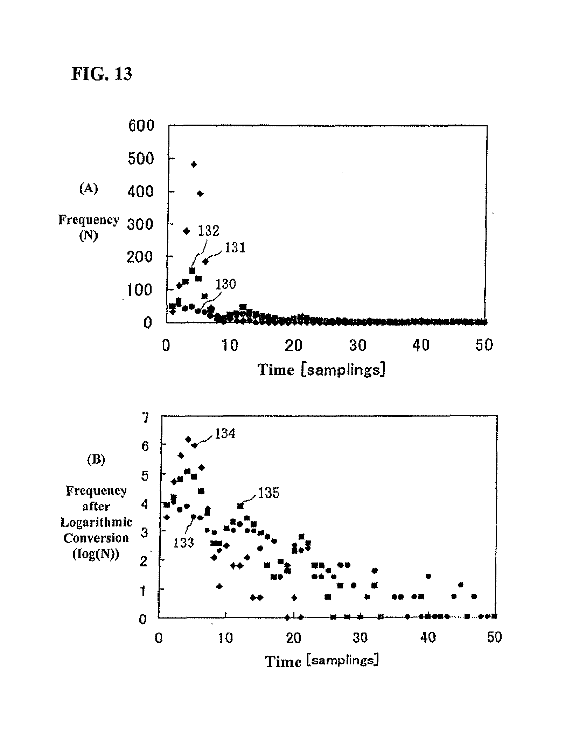

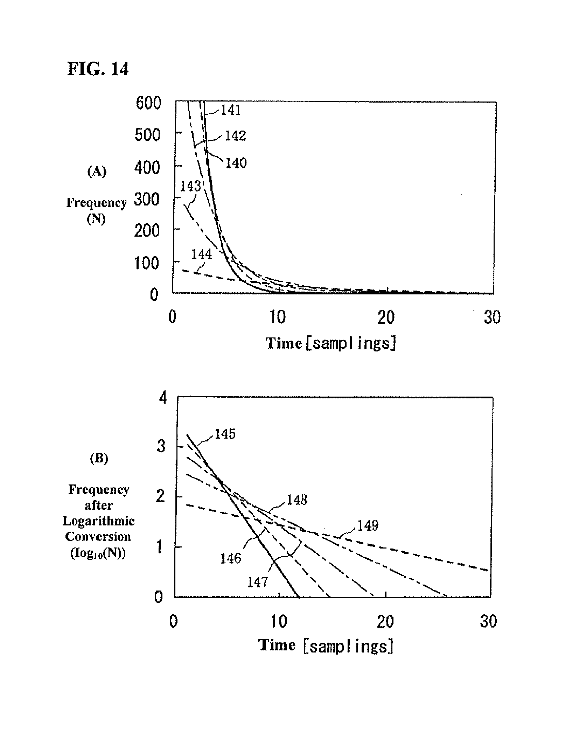

FIG. 13 (A), FIG. 13 (B), FIG. 14 (A), and FIG. 14 (B) are diagrams for explaining the problem areas in the signal evaluating device 10. FIG. 13 (A) is a diagram illustrating the run length frequency distribution when the hysteresis width is larger than in the case in FIG. 12 (A) and FIG. 12 (B), and FIG. 13 (B) is a diagram illustrating the run length frequency distribution after a logarithmic conversion of the run length frequency distribution of FIG. 13 (A). In FIG. 13 (A): 130 is the frequency distribution when the output of the filter portion 6 is in the non-signal state; 131 is the frequency distribution when the signal included in the output of the filter portion 6 is valid and there is little noise; and 132 is the frequency distribution when the signal included in the output of the filter portion 6 is valid and there is a great deal of noise. Moreover, in FIG. 13 (B), 133, 134, and 135 are the respective frequency distributions after logarithmic conversions of the run length frequency distributions 130, 131, and 132.

FIG. 14 (A) is a diagram illustrating the relationship between the probability p of a transition in sign after binarization of the input signal when in a non-signal state and the run length frequency distribution (the geometric distribution), and FIG. 14 (B) is a diagram illustrating the frequency distribution after a logarithmic conversion of the run length frequency distribution (geometric distribution) of FIG. 14 (A). In FIG. 14 (A): 140 is the frequency distribution when p = 0.5; 141 is the frequency distribution when p = 0.4; 142 is the frequency distribution when p = 0.3; 143 is the frequency distribution when p = 0.2; and 144 is the frequency distribution when p = 0.1. Moreover, in FIG. 14 (B), 145, 146, 147, 148, and 149 are the respective frequency distributions after logarithmic conversions of the run length frequency distributions (geometric distributions) 140, 141, 142, 143, and 144. When the hysteresis width of the time of binarization is 0, then the probability p = 0.5, and the greater the hysteresis width relative to the amplitude of the MHP, the less the probability p.

As is clear from FIG. 13 (A), FIG. 13 (B), FIG. 14 (A), and FIG. 14 (B), the greater the hysteresis width relative to the amplitude of the MHP, the larger the number of omissions of the time of binarization, causing the bias in the run length frequency distributions to be smaller, causing the shape of the run length frequency distribution to be as a geometric distribution when in a non-signal state. Because of this, the signal evaluating device 10 in the above example may determine that there is no valid signal, even when the MHP included in the output of the filter portion 6 is actually a valid signal. The present example is in order to solve this type of problem.

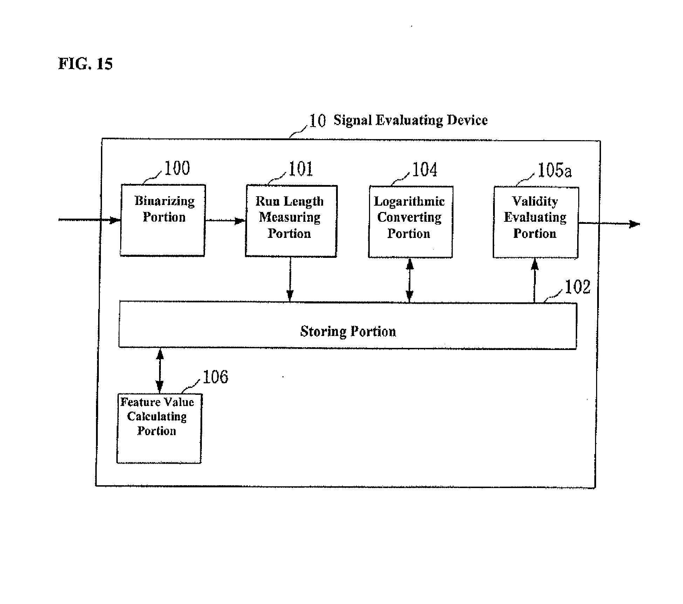

In the present example as well, the structure of the self-coupling laser sensor is identical to that in the above example, and thus the codes in FIG. 1 will be used in the explanation. FIG. 15 is a block diagram illustrating one configuration of a signal evaluating device 10 according to the present example. The signal evaluating device 10 according to the present example includes a binarizing portion 100; a run length measuring portion 101; a storing portion 102, a logarithmic converting portion 104; a validity evaluating portion 105a, and a feature value calculating portion 106.

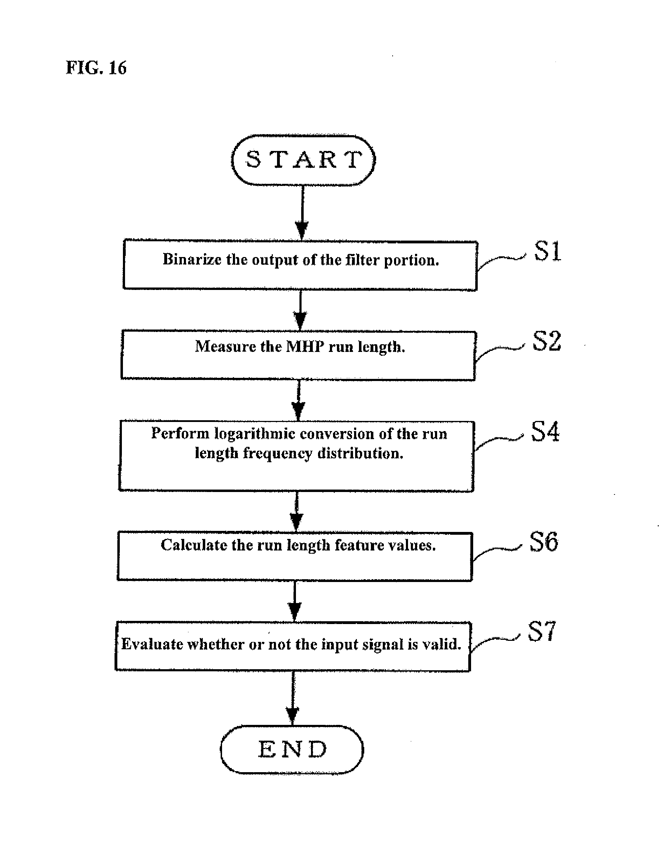

FIG. 16 is a flowchart illustrating the operation of a signal evaluating device 10 according to the present example. The operations of the binarizing portion 100, the run length measuring portion 101, and the logarithmic converting portion 104 are the same as in the above example. (Step S1, S2, and S4 in FIG. 16)

Following this, the feature value calculating portion 106 calculates a feature value T0 for the run lengths during the evaluation interval, based on the measurement results of the run length measuring portion 101 stored in the storing portion 102 (Step S6 in FIG. 16). The run length feature values T0 include the average value, the maximum frequency, and the median value. Additionally, the class which has the maximum product of the class and the frequency may be used as the run length feature value T0. The feature value T0, calculated by the feature value calculating portion 106, is stored in the storing portion 102.

Following this, the validity evaluating portion 105a evaluates whether or not the input signal is valid, based on the conversion processing results by the logarithmic converting portion 104 and the feature value T0 stored in the storing portion 102 (Step S7 in FIG. 16). Specifically, the validity evaluating portion 105a calculates a coefficient of determination (a regression $R^2$) when applying the least-squares method to the run length frequency distribution wherein the class is no more than 2T0, of all of the run length frequency distribution after logarithmic conversion, obtained from the conversion processing results of the logarithmic converting portion 104, and if this coefficient of determination is greater than a specific evaluation threshold value, then the evaluation is that the signal (MHP) included in the output of the filter portion 6 is invalid, but if the coefficient of determination is less than the evaluation threshold value, then the evaluation is that the signal (MHP) included in the output of the filter portion 6 is valid.

The signal evaluating device 10 performs processes such as described above with each evaluating interval. The display portion 9 displays the evaluation results by the signal evaluating device 10.

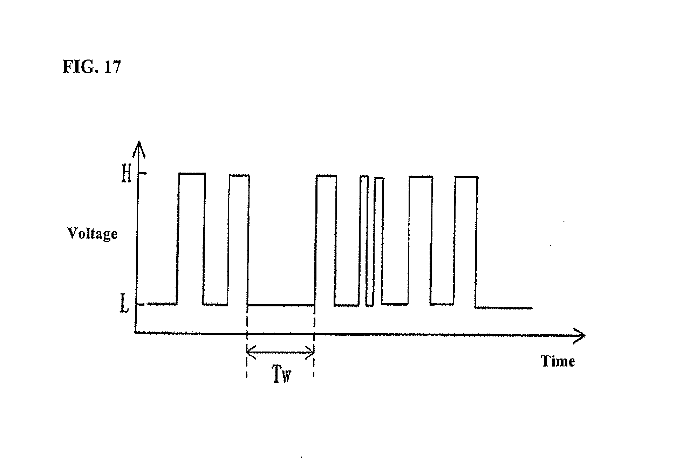

FIG. 17 is a diagram for explaining the principle of the evaluation by the signal evaluating device according to the present example, a diagram showing a the output of the binarizing portion 100.

There are some gaps in the MHP waveform due to noise, and, as a result, there are times wherein there are gaps produced in the waveform outputted from the binarizing portion 100. When a signal is missing, then the run length Tw of the binarized output at the location wherein this missing portion occurred will be about three times the actual run length. In other words, if the run length of the binarized output is more than about three times that of the standard period T0, then it can be concluded that there was a portion missing in the signal. Given this, the use of a run length frequency distribution that is no more than the class 2T0, which is resistant to the effects of signal loss, makes it possible to ameliorate the problem areas explained in FIG. 13 (A), FIG. 13 (B), FIG. 14 (A), and FIG. 14 (B), making it possible to improve the accuracy of the evaluation as to whether or not the input signal is valid.

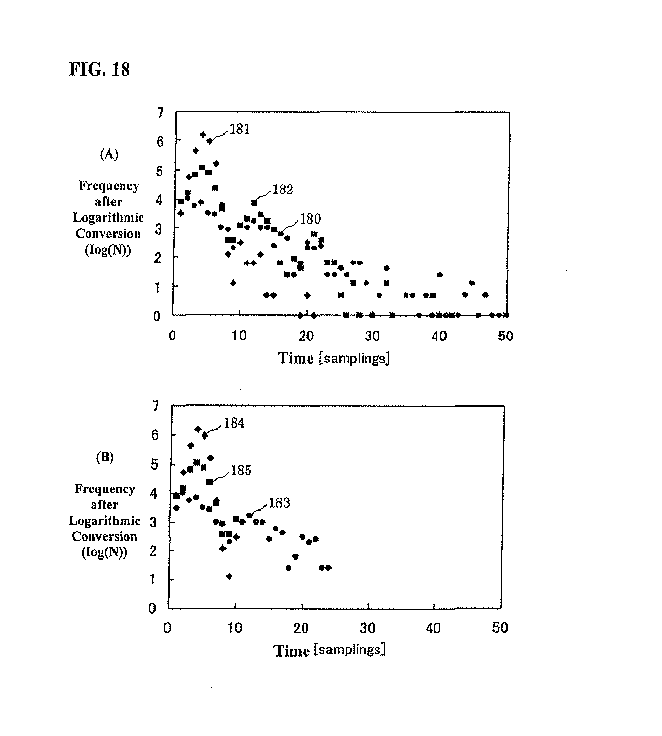

FIG. 18 (A) and FIG. 18 (B) are diagrams for explaining the effects of the signal evaluating device 10 in the present example, where FIG. 18 (A) is a diagram illustrating an example of the run length frequency distribution after logarithmic conversion obtained from the results of the conversion processing by the logarithmic converting portion 104, and FIG. 18 (B) is a diagram illustrating the run length frequency distribution for the run length frequency distribution of FIG. 18 (A) wherein the class is no more than 2T0. In FIG. 18 (A): 180 is the frequency distribution when the output of the filter portion 6 is in the non-signal state; 181 is the frequency distribution when the signal included in the output of the filter portion 6 is valid and there is little noise; and 182 is the frequency distribution when the signal included in the output of the filter portion 6 is valid and there is a great deal of noise. Moreover, in FIG. 18 (B), 183, 184, and 185 are the respective frequency distributions wherein the class is no more than 2T0, from the run length frequency distributions 180, 181, and 182.

In the processing by the signal evaluating device 10 in the above example, the coefficient of determination obtained from the run length frequency distribution 180 is 0.7379, the coefficient of determination obtained from the run length frequency distribution 181 is 0.6824, and the coefficient of determination obtained from the run length frequency distribution 182 is 0.6573. In this way, there is little difference between the coefficient of determination when in a non-signal state and the coefficient of determination in a state wherein the signal is valid, and thus it can be seen that it is difficult to discriminate between the non-signal state and the state wherein there is a signal.

In contrast, in the processing by the signal evaluating device 10 in the present example, the coefficient of determination obtained from the run length frequency distribution 183 is 0.7691, the coefficient of determination obtained from the run length frequency distribution 184 is 0.3933, and the coefficient of determination obtained from the run length frequency distribution 185 is 0.4673. Consequently, if the threshold value is set between 0.7691 and 0.4673, then it is possible to discriminate between a non-signal state and a state wherein the signal is valid.

As described above, the present example makes it possible to increase the accuracy of evaluation as to whether or not an input signal is valid, when compared to the above example.

Note that while in the examples above the explanations were for a case wherein the signal evaluating device according to the present invention is applied to a self-coupling laser sensor, there is no limitation thereto, but rather the signal evaluating device according to the present invention can be applied also to other fields.

Additionally, in the examples above the calculating portion 8 and the signal evaluating device 10 may be achieved through, for example, a computer that is provided with a CPU, a storage device, and an interface, and through a program that controls these hardware resources. The program for operating such a computer is provided in a state that is stored on a storage medium such as a floppy disk, a CD-ROM, a DVD-ROM, a memory card, or the like. A CPU writes to a storage device a program that has been read, to thereby achieve the processes described in the present form of embodiment following the program.

The present invention can be applied to a technology for evaluating whether or not an input signal is valid.

**Claims**

1. A signal evaluating device (10) comprising:

   a binarizing device (100) binarizing an input signal;
   a run length measuring device (101) measuring the run length of the sign when there is a change in the sign that is the result of binarization of the input signal during the evaluating interval, using the output of the binarizing device as the input; and
   an evaluating device (103) evaluating whether or not the input signal is valid, from the degree of matching of a run length frequency distribution, obtained from the measurement results by the run length measuring device, and a geometric distribution.

2. The signal evaluating device as set forth in claim 1, wherein:

the binarizing device binarizes the input signal in a state wherein the hysteresis width is zero, and the evaluating device evaluates whether or not the input signal is valid through a ratio of the total frequency during the evaluation interval to Nsamp/2, or a ratio of the frequency of a class 1 during the evaluating interval to Nsamp/4, where Nsamp is the total of the sampling clocks for measuring the run length during the evaluating interval.

3. The signal evaluating device as set forth in claim 1 or 2, wherein the evaluating device comprises:

a logarithmic converter (104) performing a logarithmic conversion of the frequency, for the run length frequency distribution obtained from the measurement results during the evaluating interval by the run length measuring device; and
a validity evaluator evaluating whether or not the input signal is valid, from a coefficient of determination when a least-squares method for a linear function that is the geometric distribution is used on the run length frequency distribution after the logarithmic conversion obtained from the results of the conversion process by the logarithmic converter.

4. The signal evaluating device as set forth in claim 3, wherein:

the validity evaluator (103) evaluates whether or not the input signal is valid from the coefficient of determination when a least-squares method for an exponential function that is the geometric distribution is used on the run length frequency distribution of those classes that are less than a specific value, of the run length frequency distribution after logarithmic conversion.

5. The signal evaluating device as set forth in claim 4, wherein:

the evaluating device further comprises a feature value calculator calculating a feature value T0 of a run length distribution, from the measurement results during the evaluating interval by the run length measuring means; and wherein the validity evaluator evaluates whether or not the input signal is valid from a coefficient of determination when a least-squares method is applied to a run length frequency distribution wherein the class is no higher than 2T0, of the run length frequency distribution after the logarithmic conversion.

6. A signal evaluating method comprising the steps of:

a binarizing step binarizing an input signal;
a run length measuring step measuring the run length of the sign when there is a change in the sign that is the result of binarization of the input signal during the evaluating interval, using the output of this binarizing step as the input; and
an evaluating step for evaluating whether or not the input signal is valid, from the degree of matching of a run length frequency distribution, obtained from the measurement results by the run length measuring step, and a geometric distribution.

7. The signal evaluating method as set forth in claim 6, wherein:

the binarizing step binarizes the input signal in a state wherein the hysteresis width is zero; and
the evaluating step evaluates whether or not the input signal is valid through a ratio of the total frequency during the evaluation interval to Nsamp/2, or a ratio of the frequency of a class 1 during the evaluating interval to Nsamp/4, where Nsamp is the total of the sampling clocks for measuring the run length during the evaluating interval.

8. The signal evaluating method as set forth in claim 6 or 7, wherein the evaluating step comprises the steps of:

a logarithmic converting step performing a logarithmic conversion of the frequency, for the run length frequency distribution obtained from the measurement results during the evaluating interval by the run length measuring step; and
a non-signal status evaluating step evaluating whether or not the input signal is valid, from a coefficient of determination when a least-squares method for a linear function that is the geometric distribution is used on the run length frequency distribution after the logarithmic conversion obtained from the results of the conversion process by the logarithmic converting step.

9. The signal evaluating method as set forth in claim 8, wherein:

the non-signal status evaluating step evaluates whether or not the input signal is valid from the coefficient of determination when a least-squares method for an exponential function that is the geometric distribution is used on the run length frequency distribution of those classes that are less than a specific value, of the run length frequency distribution after logarithmic conversion.

10. The signal evaluating step as set forth in claim 9, wherein the evaluating step further comprises the step of:

prior to the non-signal status evaluating step, a feature value calculating step for calculating a feature value T0 of a run length distribution, from the measurement results during the evaluating interval by the run length measuring step;
wherein the non-signal status evaluating step evaluates whether or not the input signal is valid from a coefficient of determination when a least-squares method is applied to a run length frequency distribution wherein the class is no higher than 2T0, of the run length frequency distribution after the logarithmic conversion.

FIG. 1

FIG. 2

(A)
Voltage

(B)
Voltage

Time

Time

P1   P2   P1   P2   P1

FIG. 3

EP 2 402 782 A2

FIG. 4

START

Binarize the output of the filter portion. — S1

Measure the MHP run length. — S2

Evaluate whether or not the input signal is valid. — S3

END

15

## FIG. 5

(A) Voltage

(B) Voltage

FIG. 6

(A)

Frequency (N)

Time [samplings]

(B)

Frequency after Logarithmic Conversion $(\log_{10}(N))$

Time [samplings]

FIG. 7

FIG. 8

EP 2 402 782 A2

FIG. 9

10 Signal Evaluating Device

| 100 | 101 | 104 | 105 |
|---|---|---|---|
| Binarizing Portion | Run Length Measuring Portion | Logarithmic Converting Portion | Validity Evaluating Portion |

102

Storing Portion

20

FIG. 10

```
        ┌─────────────┐
        │   START     │
        └──────┬──────┘
               │
               ▼
┌──────────────────────────────────┐
│ Binarize the output of the        │──── S1
│ filter portion.                   │
└──────────────┬───────────────────┘
               │
               ▼
┌──────────────────────────────────┐
│   Measure the MHP run length.     │──── S2
└──────────────┬───────────────────┘
               │
               ▼
┌──────────────────────────────────┐
│ Perform logarithmic conversion of │──── S4
│ the run length frequency          │
│ distribution.                     │
└──────────────┬───────────────────┘
               │
               ▼
┌──────────────────────────────────┐
│ Evaluate whether or not the input │──── S5
│ signal is valid.                  │
└──────────────┬───────────────────┘
               │
               ▼
        ┌─────────────┐
        │    END      │
        └─────────────┘
```

FIG. 11

FIG. 12

(A)

Frequency
(N)

(B)

Frequency
after
Logarithmic
Conversion
(log(N))

FIG. 13

(A)

Frequency (N)

132
131
130

Time [samplings]

(B)

Frequency after Logarithmic Conversion (log(N))

134
135
133

Time [samplings]

## FIG. 14

(A)

Frequency (N)

Time [samplings]

(B)

Frequency after Logarithmic Conversion $(\log_{10}(N))$

Time [samplings]

FIG. 15

10 Signal Evaluating Device

| 100 Binarizing Portion | 101 Run Length Measuring Portion | 104 Logarithmic Converting Portion | 105a Validity Evaluating Portion |

102 Storing Portion

106 Feature Value Calculating Portion

FIG. 16

```
                    ╭─────────────╮
                   │  S T A R T   │
                    ╰──────┬──────╯
                           │
                           ▼
        ┌──────────────────────────────────────┐
        │  Binarize the output of the filter portion.  │ ───  S1
        └──────────────────────────────────────┘
                           │
                           ▼
        ┌──────────────────────────────────────┐
        │        Measure the MHP run length.         │ ───  S2
        └──────────────────────────────────────┘
                           │
                           ▼
        ┌──────────────────────────────────────┐
        │  Perform logarithmic conversion of the run │ ───  S4
        │      length frequency distribution.        │
        └──────────────────────────────────────┘
                           │
                           ▼
        ┌──────────────────────────────────────┐
        │     Calculate the run length feature values. │ ───  S6
        └──────────────────────────────────────┘
                           │
                           ▼
        ┌──────────────────────────────────────┐
        │ Evaluate whether or not the input signal is valid. │ ───  S7
        └──────────────────────────────────────┘
                           │
                           ▼
                    ╭─────────────╮
                   │   E N D     │
                    ╰─────────────╯
```

FIG. 17

FIG. 18

FIG. 19

**FIG. 20**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010148910 A
- JP 2006313080 A
- JP 2010078560 A
- JP 2010078393 A